# EUROPÄISCHE PATENTSCHRIFT

(11) **EP 2 674 987 B1**
(45) Veröffentlichungstag und Bekanntmachung des Hinweises auf die Patenterteilung: **07.02.2018**
(21) Anmeldenummer: 12405056.8
(22) Anmeldetag: 13.06.2012
(51) Int. Cl.: H02S 20/24, F24J 2/52

(54) **Modulträger für Solarmodule sowie Anordnung mit mehreren Modulträgern**
Module holder for solar modules and assembly with multiple module holders
Support de module pour module solaire et agencement de plusieurs supports de modules

(43) Veröffentlichungstag der Anmeldung: 18.12.2013
(73) Patentinhaber: Zagsolar AG, 6010 Kriens (CH)
(72) Erfinder: Durot, Richard, 6010 Kriens (CH); Meyer, David, 6005 Luzern (CH)
(74) Vertreter: Nückel, Thomas

(56) Entgegenhaltungen:
- EP-A1- 1 310 747
- EP-A1- 2 346 089
- EP-A2- 0 137 666
- EP-A2- 2 136 412
- WO-A1-01/69688
- WO-A2-2012/004542
- DE-A1-102008 037 734
- DE-U1-202008 014 174
- DE-U1-202010 007 600
- FR-A1- 2 935 410
- FR-A1- 2 944 568
- FR-A1- 2 951 757

## Beschreibung

### Technisches Gebiet

Die Erfindung betrifft einen Modulträger für Solarmodule sowie eine Anordnung mit mehreren Modulträgern. Der Modulträger dient dazu, ein Solarmodul auf einer Fläche wie beispielsweise einem Dach zu installieren. Mehrere der Modulträger können zu einer Modulträgeranordnung zusammengesetzt werden.

### Stand der Technik

Das Dokument EP 0137666 A2 offenbart einen Modulträger für Solarmodule.

Um die Material- und Montagekosten für die Installation eines Solarmoduls auf einem Flachdach möglichst gering zu halten, soll der Modulträger so ausgebildet sein, dass er auf dem Dach mit bereits vorhandenem losen Ballast, wie beispielsweise Kies, ausreichend fest positioniert werden kann.

Ein Modulträger, dem diese Aufgabe zugrunde liegt, ist aus dem Stand der Technik Druckschrift WO 2009/077030 A1 bekannt. Der Träger dient zum Stützen bzw. Montieren eines Solarpaneels auf einem Dach. Der Träger umfasst an der Unterseite des Bodens vorgesehene Aufstellelemente, die zum Aufstellen des Trägers auf einem Dach bestimmt sind. Zudem umfasst der Träger auf der Oberseite Befestigungsmittel, mit denen ein Solarpaneel im montierten Zustand bezüglich der Dachebene schräg gehalten wird. Auf der linken und der rechten Seite weist der Träger jeweils eine Kopplungserhöhung auf. Möchte man mehrere dieser Träger nebeneinander auf dem Dach platzieren, kann man die Kopplungserhöhungen nutzen. Auf der Vorder- und der Rückseite des Trägers sind solche Kopplungserhöhungen allerdings nicht vorgesehen. Der Träger ist so ausgestaltet, dass man mehrere davon zwar nebeneinander in einer Reihe, also eindimensional miteinander über die seitlichen Kopplungserhöhungen koppeln kann. Möchte man die Träger allerdings zweidimensional miteinander koppeln, so ist dies mit diesen Trägern ohne zusätzliches Montagematerial nicht möglich. Dazu kommt, dass für die zweidimensionale Kopplung der Träger auch ein erheblicher zusätzlicher Zeitaufwand erforderlich ist.

Des Weiteren ist aus der Druckschrift EP 2 136 412 A2 ein Modulträger für ein Solarpanel bekannt. Der Modulträger weist am linken Rand eine erste U-förmige Halbschale und am rechten Rand eine zweite U-förmige Halbschale auf. Die erste U-förmige Halbschale ist im Querschnitt um so viel grösser als die zweite U-förmige Halbschale, dass sie über die zweite U-förmige Halbschale eines baugleichen weiteren Modulträgers gestülpt werden kann. Jede der U-förmigen Halbschalen erstreckt sich über die gesamte Länge des Modulträgers. Diese Lösung hat den Nachteil, dass zwei baugleiche Modulträger nicht in beliebiger Orientierung miteinander verbunden werden können. Die Modulträger müssen immer so gedreht werden, dass die erste U-förmige Halbschale des ersten Modulträgers über der zweiten U-förmige Halbschale des zweiten Modulträgers zu liegen kommt. Andernfalls ist keine Verbindung der Modulträger möglich. Darüber hinaus sind zwei so miteinander verbundene Modulträger nur in einer Dimension und zwar in Querrichtung, nicht aber in Längsrichtung zueinander ausgerichtet. Die U-förmigen Halbschalen geben in Längsrichtung keinen bestimmten Abstand der Modulträger zueinander vor und verhindern auch nicht, dass sich die beiden Modulträger in Längsrichtung zueinander verschieben können.

Ein weiterer Modulträger für ein Solarpanel ist aus der Druckschrift FR 2 951 757 bekannt. Dieser Modulträger ist als Dachplatte ausgebildet und weist links und rechts aussen jeweils eine sich über die gesamte Länge des Modulträgers erstreckende Aufkantung auf. Der Modulträger weist im Wesentlichen die gleichen Nachteile wie der oben Beschriebene auf.

### Darstellung der Erfindung

Eine Aufgabe der Erfindung ist es, einen Modulträger für Solarmodule anzugeben, der so ausgebildet ist, dass man mit mehreren der Modulträger mit geringem Material- und Zeitaufwand eine Fläche, zum Beispiel ein Flachdach, bedecken kann. Der Material- und Zeitaufwand zum Verlegen der Modulträger soll minimiert werden.

Ein Vorteil der Erfindung besteht darin, dass der Modulträger für Solarmodule so aufgebaut ist, dass man mit ihm auf einfachste Art und Weise ein Raster bilden kann. Dazu werden die Modulträger lediglich an den dafür vorgesehenen Verbindungsstellen übereinander gelegt, so dass sie an den Verbindungsstellen einen Formschluss bilden. Mit einer solchen Anordnung von Modulträgern kann man also eine gerasterte Modulträgerfläche bilden. Eine Verschraubung, Verklebung oder sonstige zusätzliche Verbindung der einzelnen Modulträger ist nicht erforderlich. Der zeitliche Aufwand für die Verlegung der Modulträger ist somit minimal.

Die Aufgabe wird durch einen Modulträger für Solarmodule mit den in Patentanspruch 1 angegebenen Merkmalen gelöst. Der erfindungsgemässe Modulträger für Solarmodule umfasst eine Grundstruktur, auf der mehrere Kuppen in einer ersten Reihe und mehrere Kuppen in einer zweiten Reihe angeordnet sind. Die Kuppen sind derart ausgebildet, dass sie mit den Kuppen eines weiteren funktional gleichen Modulträgers einen Formschluss bilden können.

Vorteilhafter Weise kann der erfindungsgemässe Modulträger auf jeder Seite mit einem weiteren Modulträger in Verbindung gebracht werden, indem man die entsprechenden Kuppen übereinander stülpt.

Die Aufgabe wird zudem durch einen Modulträger für Solarmodule mit den in Patentanspruch 13 angegebenen Merkmalen gelöst.

Der erfindungsgemässe Modulträger für Solarmodule umfasst eine Grundstruktur, auf der eine erste Kuppe und eine zweite Kuppe angeordnet sind. Die Kuppen sind derart ausgebildet, dass die erste Kuppe eines weiteren funktional gleichen Modulträgers mit der ersten Kuppe einen Formschluss bilden kann.

Vorteilhafte Weiterbildungen der Erfindung ergeben sich aus den in den abhängigen Patentansprüchen angegebenen Merkmalen.

Bei einer Ausführungsform des erfindungsgemässen Modulträgers für Solarmodule sind die Kuppen der ersten Reihe derart ausgebildet, dass sie mit den Kuppen der ersten Reihe des weiteren Modulträgers einen Formschluss bilden können.

Bei einer weiteren Ausführungsform des erfindungsgemässen Modulträgers für Solarmodule sind die Kuppen der zweiten Reihe derart ausgebildet, dass sie mit den Kuppen der zweiten Reihe des weiteren Modulträgers einen Formschluss bilden können.

Darüber hinaus können bei dem erfindungsgemässen Modulträger für Solarmodule die Kuppen der ersten Reihe und/oder der zweiten Reihe zueinander äquidistant angeordnet sein.

Der erfindungsgemässe Modulträger kann beispielsweise aus Kunststoff oder Aluminium hergestellt sein. Kunststoff und Aluminium sind einfach zu verarbeitende Materialien. Darüber hinaus ist Kunststoff besonders kostengünstig.

Bei einer Weiterbildung des erfindungsgemässen Modulträgers sind die Kuppen hohl.

Bei einer anderen Weiterbildung des erfindungsgemässen Modulträgers sind die Kuppen der ersten Reihe kleiner als die Kuppen der zweiten Reihe.

Zudem kann vorgesehen sein, dass bei dem erfindungsgemässen Modulträger die Kuppen der ersten Reihe um so viel niedriger als die Kuppen der zweiten Reihe sind, dass eine gedachte Verbindungslinie zwischen den Kuppen der ersten und zweiten Reihe mit der Horizontalen einen Winkel von 5° einschliesst.

Alternativ dazu kann vorgesehen sein, dass bei dem erfindungsgemässen Modulträger die Kuppen der ersten Reihe um so viel niedriger als die Kuppen der zweiten Reihe sind, dass eine gedachte Verbindungslinie zwischen den Kuppen der ersten und zweiten Reihe mit der Horizontalen einen Winkel von 3° oder 8° einschliesst.

Bei einer Ausführungsform des erfindungsgemässen Modulträgers sind in der Grundstruktur Versteifungsrippen vorgesehen, wobei deren Längsachse quer zur ersten Reihe der Kuppen verläuft.

Bei einer anderen Ausführungsform des erfindungsgemässen Modulträgers sind die Kuppen oben flach ausgebildet, so dass auf ihnen ein Montageprofil befestigbar ist.

Bei einer zusätzlichen Ausführungsform des erfindungsgemässen Modulträgers ist auf den Kuppen der ersten Reihe ein erstes Montageprofil und auf den Kuppen der zweiten Reihe ein zweites Montageprofil befestigt. Die Montageprofile sind unterschiedlich hoch. Auch auf diese Weise kann man erreichen, dass das auf den Montageprofilen montierte Solarmodul gegenüber der Horizontalen geneigt ist.

Die erfindungsgemässe Anordnung von Modulträgern umfasst mehrere der oben beschriebenen Modulträger, wobei die Kuppen der ersten Reihe eines ersten Modulträgers mit den Kuppen der ersten Reihe eines zweiten Modulträgers einen Formschluss bilden. Auf den Kuppen der ersten Reihe ist ein Montageprofil angeordnet.

Vorteilhafter Weise ist bei der erfindungsgemässen Anordnung auf den Kuppen der zweiten Reihe ein weiteres Montageprofil angeordnet.

Darüber hinaus können bei der erfindungsgemässen Anordnung Klammern vorgesehen sein, mit denen Solarmodule auf den Montageprofilen befestigbar sind.

Schliesslich kann der erfindungsgemässe Modulträger zur Montage von Photovoltaikmodulen verwendet werden.

### Kurze Beschreibung der Zeichnungen

Im Folgenden wird die Erfindung mit mehreren Ausführungsbeispielen anhand von 11 Figuren weiter erläutert.
- Figur 1: zeigt eine erste mögliche Ausführungsform des erfindungsgemässen Modulträgers für ein Solarmodul in einer dreidimensionalen Ansicht.
- Figur 2: zeigt die erste Ausführungsform des erfindungsgemässen Modulträgers in der Seitenansicht, in der Ansicht von hinten und in der Draufsicht.
- Figur 3: zeigt eine beispielhafte Anordnung mit mehreren Modulträgern in einer dreidimensionalen Ansicht.
- Figur 4: zeigt eine erste Ausführungsform eines Montageprofils, auf das ein Solarmodul montiert werden kann, in der Draufsicht.
- Figur 5: zeigt das Montageprofil in der Seitenansicht.
- Figur 6: zeigt ein Solarmodul, das auf eine zweite Ausführungsform des Montageprofils montiert ist, in der Seitenansicht.
- Figur 7: zeigt die zweite Ausführungsform des Montageprofils in der Seitenansicht.
- Figur 8: zeigt eine Montageklammer zur Befestigung eines Solarmoduls auf dem Montageprofil in der Seitenansicht.
- Figur 9: zeigt eine zweite mögliche Ausführungsform des erfindungsgemässen Modulträgers für ein Solarmodul in einer dreidimensionalen Ansicht.
- Figur 10: zeigt eine Anordnung aus zwei nebeneinander angeordneten Modulträgern gemäss der zweiten Ausführungsform in einer dreidimensionalen Ansicht.
- Figur 11: zeigt eine Anordnung aus zwei hintereinander angeordneten Modulträgern gemäss der zweiten Ausführungsform in einer dreidimensionalen Ansicht.

### Wege zur Ausführung der Erfindung

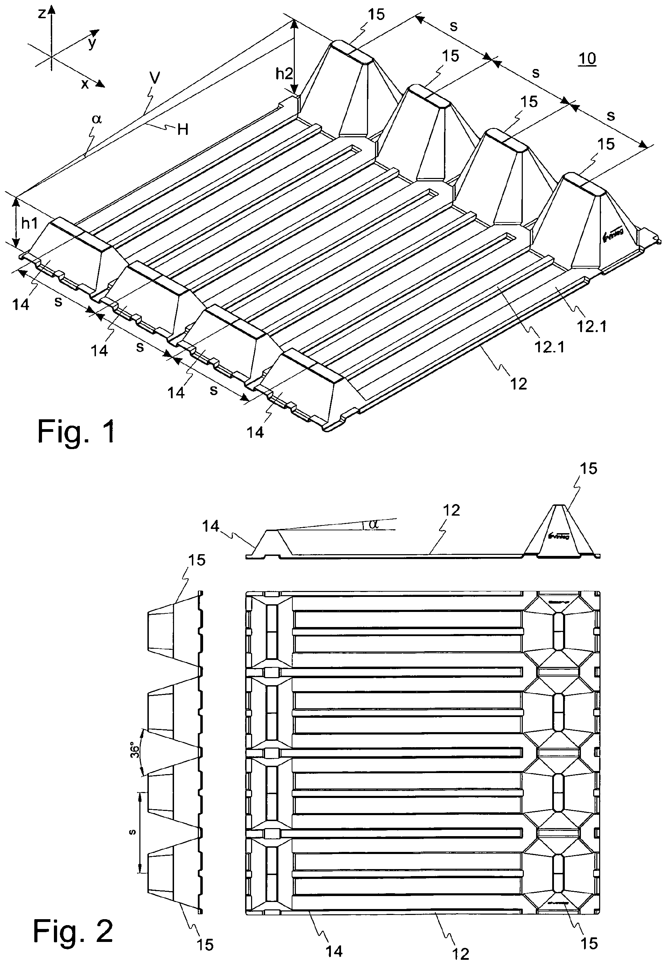

In Figur 1 ist eine erste mögliche Ausführungsform des erfindungsgemässen Modulträgers 10 für ein Solarmodul in einer dreidimensionalen Ansicht dargestellt. Figur 2 zeigt den Modulträger 10 in der Seitenansicht, in der Ansicht von hinten und in der Draufsicht. Der Modulträger 10 umfasst eine Grundstruktur 12, die vorne eine erste Reihe mit vier Kuppen 14 und hinten eine zweite Reihe mit weiteren vier Kuppen 15 aufweist. Zwischen der ersten Reihe von Kuppen 14 und der zweiten Reihe von Kuppen 15 ist die Grundstruktur 12 im Wesentlichen flach ausgebildet. Um den Modulträger 10 in y-Richtung zu versteifen, weist die Grundstruktur 12 eine Reihe von Versteifungsrippen 12.1 auf. Die Versteifungsrippen 12.1 können wie in Figur 1 gezeigt, parallel zueinander verlaufen. Dies ist jedoch nicht zwingend erforderlich. Stattdessen können die Versteifungsrippen 12.1 auch beispielsweise zick-zack förmig angeordnet sein.

Die Längsachse der ersten Reihe Kuppen 14 und die Längsachse der zweiten Reihe Kuppen 15 verlaufen in x-Richtung und liegen bei dem gezeigten Ausführungsbeispiel parallel zueinander.

Bei der in Figur 1 gezeigten Ausführungsform des Modulträgers 10 haben die Kuppen 14 eine Höhe h1 und die Kuppen 15 eine Höhe h2, wobei die Kuppen 14 niedriger als die Kuppen 15 sind. Der Höhenunterschied **Δ**h = h2 - h1 zwischen den niedrigen Kuppen 14 und den hohen Kuppen 15 sowie der Abstand zwischen den beiden Kuppenreihen geben den Neigungswinkel **α** vor, mit dem ein auf dem Modulträger 10 angeordnetes Solarmodul gegenüber der im Wesentlichen flachen Fläche des Grundträgers 12 geneigt ist. Wird der Modulträger 10 auf einer horizontalen Fläche, wie zum Beispiel einem Flachdach verlegt, gibt der Neigungswinkel **α** an, wie stark ein auf dem Modulträger 10 angeordnetes Solarmodul gegenüber der Horizontalen geneigt ist. Grundsätzlich sind verschiedene Modulträger 10 mit unterschiedlichen Neigungswinkeln **α** herstellbar. Für die Montage eines Solarpanels auf einem Flachdach kann beispielsweise ein Modulträger mit einem Neigungswinkel **α** von **α** = 3° oder **α** = 8° eingesetzt werden. Vorzugsweise beträgt der Neigungswinkel **α** = 5°. Es sind aber durchaus auch Modulträger ohne Neigungswinkel oder mit einem grösserem Neigungswinkel **α** herstellbar. Falls der Modulträger 10 mit einem Neigungswinkel **α** von beispielsweise **α** = 0° hergestellt werden soll, die Kuppen 14 der ersten Reihe und die Kuppen 15 der zweiten Reihe also gleich hoch sein sollen, kann man dennoch eine Neigung der Solarmodule erreichen, indem man unterschiedlich hohe Montageprofile 20 verwendet. So kann man auf die erste Reihe Kuppen 14 ein niedriges Montageprofil und auf die zweite Reihe Kuppen 15 ein entsprechend höheres Montageprofil montieren. In diesem Fall gibt der Höhenunterschied zwischen den beiden Montagprofilen den Neigungswinkel **α** vor.

Bei der in den Figuren 1 und 2 gezeigten Ausführungsform des erfindungsgemässen Modulträgers 10 sind die niedrigen Kuppen 14 und die hohen Kuppen 15 jeweils im gleichen Abstand s angeordnet. Zwischen den niedrigen Kuppen 14 befindet sich jeweils ein Spalt. Das Gleiche gilt sinngemäss auch für die hohen Kuppen 15.

Die Kuppen 14 und 15 sind im Querschnitt rechteckig, wobei deren Querschnittsfläche von unten nach oben abnimmt. Oben sind die Kuppen 14 und 15 flach ausgebildet. Dies hat den Vorteil, dass man darauf ohne weiteres ein Montageprofil 20 befestigen kann. Darauf wird später noch näher eingegangen.

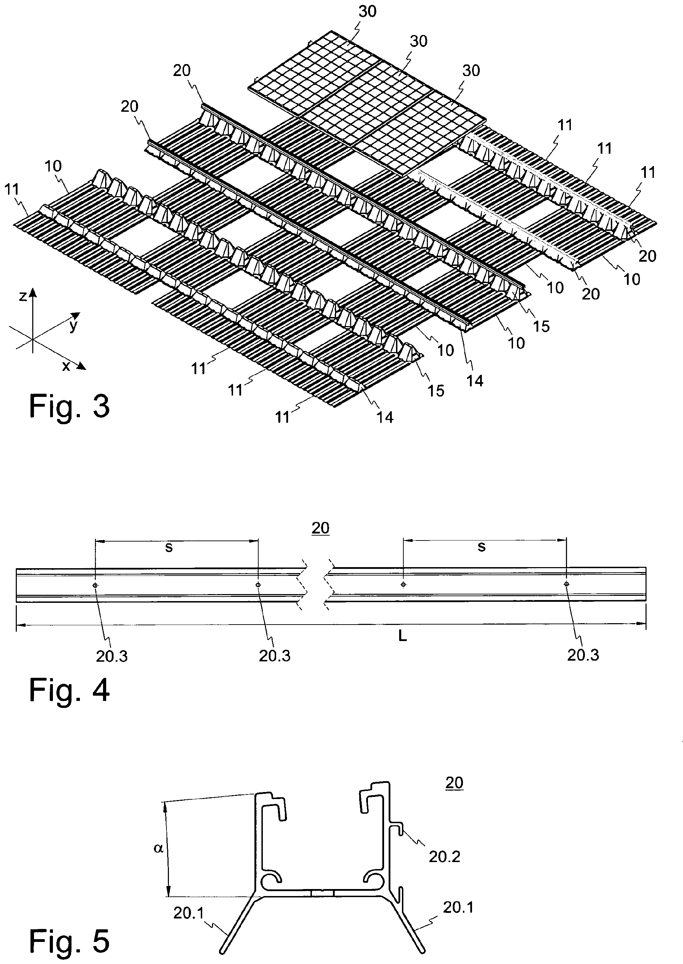

In Figur 3 ist beispielhaft eine Anordnung mit mehreren Modulträgern 10 in einer dreidimensionalen Ansicht dargestellt. Die Modulträger 10 sind dabei sowohl nebeneinander als auch hintereinander angeordnet und bilden auf diese Weise eine Fläche. Um die Modulträger 10 auszurichten, genügt es die Kuppen eines Modulträgers über die Kuppen eines anderen Modulträgers zu stülpen. Auf diese Weise entsteht ein ausserordentlich belastbarer Formschluss zwischen den benachbarten Modulträgern. Die so miteinander verbundenen Modulträger sind nun bereits fertig verlegt und exakt zueinander ausgerichtet. Die miteinander verbundenen Modulträger bilden einen Verband, der ausserordentlich stabil ist.

Wie aus Figur 3 zu erkennen ist, kann man die Kuppen eines Modulträgers auch nur über einen Teil der Kuppen eines anderen Modulträgers stülpen. Man kann also beispielsweise lediglich über die äusserste Kuppe eines Modulträgers eine Kuppe eines anderen Modulträgers stülpen. Auf diese Weise kann man leere, also nicht mit Modulträgern abgedeckte Teilflächen erzeugen und so mit der gleichen Anzahl Modulträger eine grössere nutzbare Fläche erzeugen.

Indem man auf eine hohe Kuppe 15 eines ersten Modulträgers wiederum eine hohe Kuppe 15 eines zweiten Modulträgers stülpt, erreicht man das in Figur 3 gezeigte Muster. Auf eine Reihe niedriger Kuppen folgt eine Reihe hoher Kuppen, auf die wiederum eine Reihe niedriger Kuppen folgt, so dass die Höhen der benachbarten Reihen alternieren. Auf diese Weise weisen sämtliche Solarmodule oder Solarpaneele 30 den gleichen Neigungswinkel **α** auf.

Am vorderen und hinteren Rand des Felds können halbe Modulträger 11 verlegt werden. Diese geben dem gesamten Verband und insbesondere den randständigen Modulträgern 10 eine zusätzliche Stabilität.

Nicht nur eine doppelte Überdeckung der Kuppen durch ein Übereinaderlegen zweier Modulträger, sondern auch eine dreifache Überdeckung der Kuppen durch drei Modulträger ist möglich.

Wenn die Modulträger 10 wie oben beschrieben verlegt sind, kann man die flachen Grundstrukturen 12.1 der Modulträger 10 mit Kies, Sand oder sonstigem Ballast beschweren. Als Ballast können zum Beispiel auch Betonplatten, Gehwegplatten oder Gartenplatten dienen. Dadurch wird die Stabilität der gesamten Anordnung weiter erhöht.

Auf die flache Oberseite der Kuppen 14 bzw. 15 wird ein Montageprofil 20 geschraubt, genietet oder auf sonstige Weise befestigt. Das Montageprofil 20 weist hierfür vorgesehene Bohrungen 20.3 auf. Das Montageprofil 20 ist in der Regel deutlich länger als die Breite eines Modulträgers 10, so dass es sich über die Breite mehrere Modulträger 10 erstreckt. Das auf den Kuppen befestigte Montageprofil 20 erzeugt eine zusätzliche Stabilität zwischen den nebeneinander liegenden Modulträgern 10.

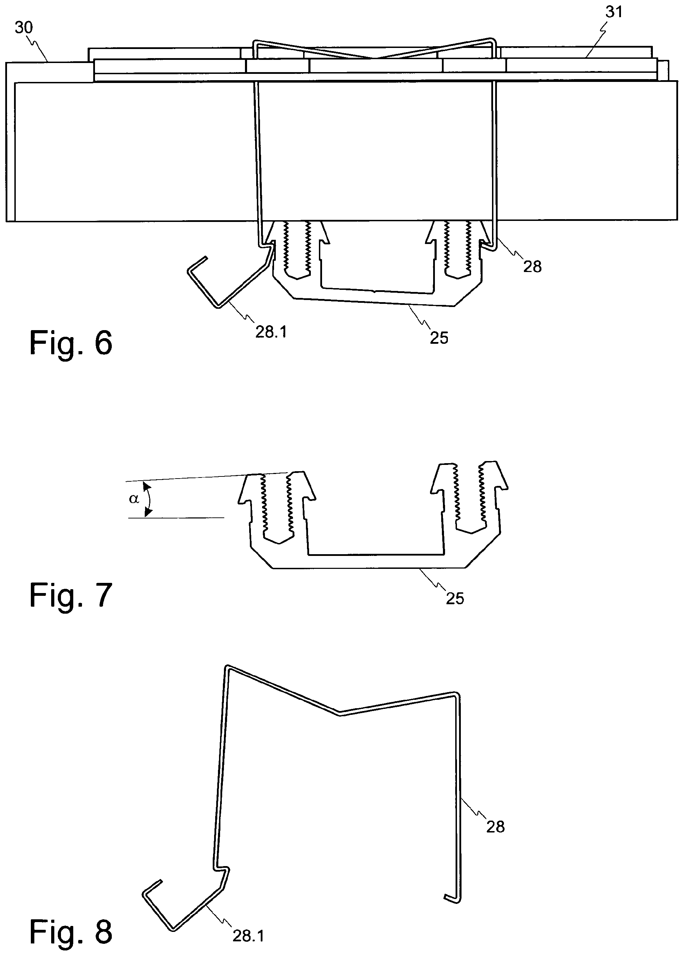

Figur 4 zeigt eine erste Ausführungsform des Montageprofils 20, auf das ein Solarmodul montiert werden kann, in der Draufsicht. Figur 6 zeigt das Montageprofil 20 in der Seitenansicht. Das Montageprofil 20 weist auf seiner Unterseite zwei schräg nach unten abstehende Profilrippen 20.1 auf. Wenn man das Montageprofil 20 auf die sich nach oben verjüngenden Kuppen 14 bzw. 15 legt, zentriert sich das Montageprofil 20 selbst. Dadurch kann das Montagepersonal zusätzlich Zeit sparen.

Seitlich am Montageprofil 20 befindet sich eine Aufnahme 20.2, an der Elektrokabel oder Leerrohre für Elektroleitungen befestigt werden können.

Sobald Montageprofile 20 auf zwei benachbarten Kuppenreihen befestigt sind, kann man mit der Montage der Solarmodule 30 beginnen (vgl. Figur 3).

Figur 6 zeigt ein Solarmodul 30, das auf eine weitere Ausführungsform des Montageprofils 25 montiert ist, in der Seitenansicht. Figur 7 zeigt die weitere Ausführungsform des Montageprofils 25 in der Seitenansicht. Die beiden nach oben zeigenden Schenkel des Montageprofils 25 sind unterschiedlich hoch und an den Neigungswinkel **α** angepasst. Figur 8 zeigt eine Montageklammer 28 zur Befestigung eines Solarmoduls 30 auf dem Montageprofil 25 in der Seitenansicht.

Am Solarmodul 30 ist eine Klemmplatte 31 vorgesehen. Um das Solarmodul 30 auf dem Montageprofil 25 zu befestigen, wird die Montageklammer 28 von oben durch eine entsprechende Aussparung in der Klemmplatte 31 gesteckt und dann auf das Montageprofil 25 gedrückt bis sie einrastet. Die Montageklammer 28 weist im unteren Bereich eine Aufnahme 28.1 auf, an der Elektrokabel oder Leerrohre für Elektroleitungen befestigt werden können.

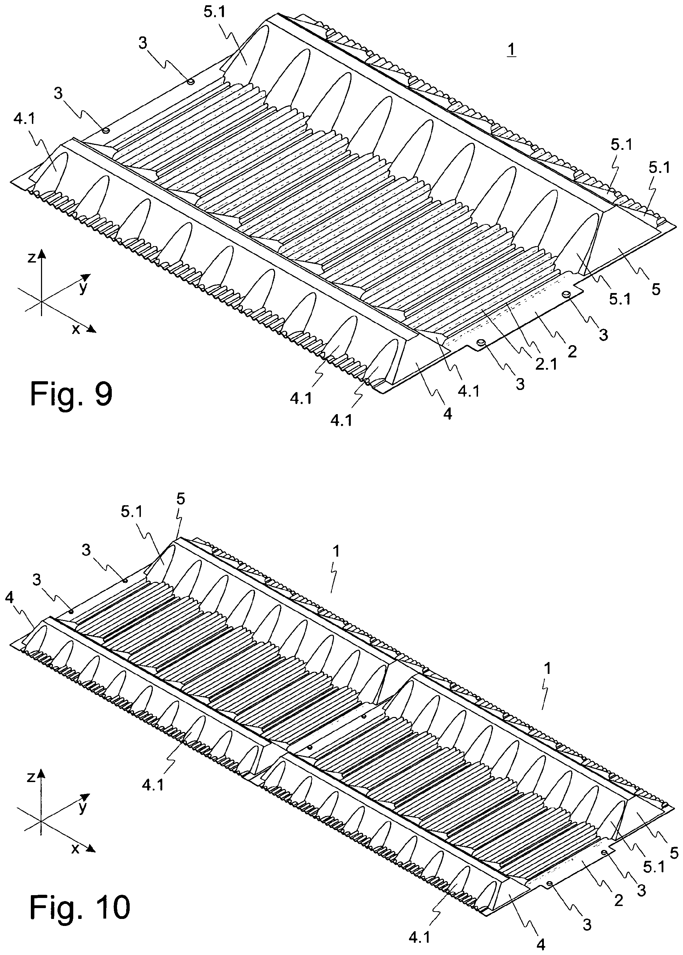

In Figur 9 ist eine zweite mögliche Ausführungsform des erfindungsgemässen Modulträgers 1 für ein Solarmodul in einer dreidimensionalen Ansicht dargestellt. Der Modulträger 1 umfasst eine Grundstruktur 2, die vorne und hinten jeweils die Form einer Kuppe 4 beziehungsweise 5 aufweist. Zwischen den beiden Kuppen 4 und 5 ist die Grundstruktur 2 im Wesentlichen flach ausgebildet. Um den Modulträger in y-Richtung zu versteifen, weist die Grundstruktur 2 eine Reihe von Versteifungsrippen 2.1 auf. Die Versteifungsrippen 2.1 können wie in Figur 9 gezeigt, parallel zueinander verlaufen. Dies ist jedoch nicht zwingend erforderlich. Stattdessen können die Versteifungsrippen 2.1 beispielsweise auch zick-zack förmig angeordnet sein.

Die Längsachsen der beiden Kuppen 4 und 5 verlaufen in x-Richtung und liegen bei dem gezeigten Ausführungsbeispiel parallel zueinander. Um die Grundstruktur 2 in y-Richtung weiter zu versteifen, weist die Kuppe 4 auf beiden Seiten Versteifungsrippen 4.1 auf. Das Gleiche gilt sinngemäss auch in Bezug auf die Kuppe 5. Sie weist ebenfalls auf beiden Seiten Versteifungsrippen 5.1 auf. Die Form und Anzahl der Versteifungsrippen 4.1 und 5.1 richtet sich nach den technischen Erfordernissen. Sie hängt beispielsweise von der Art des Materials ab, aus dem die Grundstruktur 2 hergestellt wird. Je weicher beispielsweise der verwendete Kunststoff ist, desto mehr Versteifungsrippen 4.1 und 5.1 werden vorgesehen. Das Gleiche gilt für die Dicke der Grundstruktur 2. Je dünner sie ist, desto mehr Versteifungsrippen 4.1 und 5.1 werden vorgesehen.

Um die Steifigkeit der Grundstruktur 2 zu erhöhen, kann man sie auch aus einem Laminat beziehungsweise in Sandwich-Bauweise herstellen. Auch die Höhe der Kuppen 4 und 5 kann bei der Bestimmung der Anzahl und der Form der Versteifungsrippen 4.1 und 5.1 berücksichtigt werden.

Bei der in Figur 9 gezeigten Ausführungsform des Modulträgers 1 ist die Kuppe 4 niedriger als die Kuppe 5. Der Höhenunterschied zwischen den beiden Kuppen 4 und 5 gibt den Neigungswinkel **α** vor, mit dem ein auf dem Modulträger 1 angeordnetes Solarmodul gegenüber der im Wesentlichen flachen Fläche des Grundträgers 2 geneigt ist. Wird der Modulträger auf einer horizontalen Fläche, wie zum Beispiel einem Flachdach verlegt, gibt Neigungswinkel **α** an, wie stark ein auf dem Modulträger 1 angeordnetes Solarmodul gegenüber der Horizontalen geneigt ist. Grundsätzlich sind verschiedene Modulträger 1 mit unterschiedlichen Neigungswinkeln **α** herstellbar. Für die Montage eines Solarpanels auf einem Flachdach kann beispielsweise ein Modulträger mit einem Neigungswinkel **α** von 3° oder 8° eingesetzt werden. Es sind aber durchaus auch Modulträger mit grösserem Neigungswinkel herstellbar.

Falls der Modulträger 1 mit einem Neigungswinkel **α** von beispielsweise **α** = 0° hergestellt werden soll, die beiden Kuppen 4 und 5 also gleich hoch sein sollen, kann man dennoch eine Neigung der Solarmodule erreichen, indem man unterschiedlich hohe Montageprofile 20 oder 25 verwendet. So kann man auf die erste Kuppen 4 ein niedriges Montageprofil und auf die zweite Kuppe 5 ein entsprechend höheres Montageprofil montieren. In diesem Fall gibt der Höhenunterschied zwischen den beiden Montageprofilen den Neigungswinkel **α** vor.

Links und rechts weist die Grundstruktur 2 jeweils zwei Noppen 3 auf. Möchte man mehrere Modulträger 1 in einer Reihe anordnen, kann man benachbarte Modulträger mit Hilfe der Noppen 3 miteinander formschlüssig verbinden. Figur 10 zeigt zwei auf diese Weise miteinander verbundene Modulträger 1 in einer dreidimensionalen Ansicht.

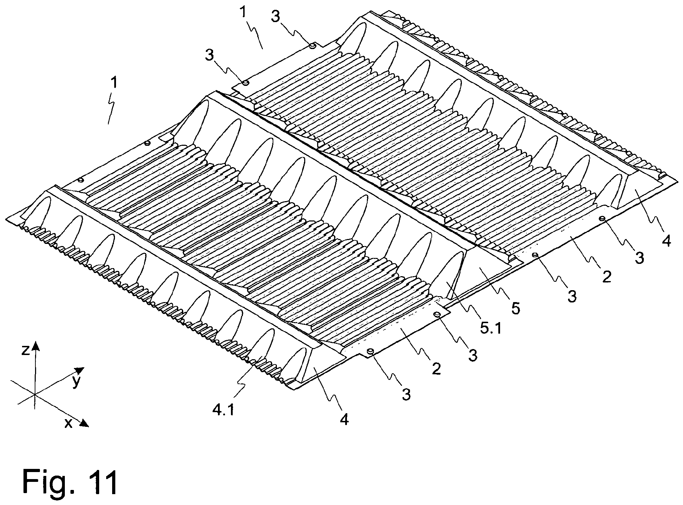

Möchte man zwei Modulträger 1 hintereinander anordnen, wie dies in Figur 11 beispielhaft gezeigt ist, stülpt man eine Kuppe des einen Modulträgers über die Kuppe des anderen Modulträgers. Anschliessend sind die beiden Modulträger exakt zueinander ausgerichtet.

Die Montage des Montageprofils 20 bzw. 25, der Solarmodule und der Montageklammern 28 erfolgt auf die bereits oben beschriebene Weise. Die Montageklammern 28 müssen nicht zwingend verwenden werden. Man kann die Solarmodule 30 auch auf jede andere Weise auf den Montageprofilen befestigen.

Die beschriebenen Modulträger 1 und 10 sind sowohl für Photovoltaikmodule als auch für Sonnenkollektoren verwendbar.

Ein Neigungswinkel **α** von **α** = 3° bzw. **α** = 8° hat den Vorteil, dass die einzelnen Solarmodule relativ nahe hintereinander angeordnet werden können, ohne dass das vordere Solarmodul bei einem niedrigen Sonnenstand das hintere Solarmodul beschattet.

Grundsätzlich ist es nicht erforderlich, dass jeder der Modulträger in einer Reihe eine Kuppe beziehungsweise vier Kuppen aufweist. Es können auch 2, 3, 5 oder mehr Kuppen sein.

Um zwei Modulträger miteinander zu verbinden, genügt es, wenn zwei funktional gleiche Modulträgers einen Formschluss bilden können. Der zweite Modulträger wird als funktional gleich wie der erste Modulträger angesehen, wenn die Form des zweiten Modulträgers mit der Form des ersten Modulträgers kompatibel ist, so dass die beiden Modulträger formschlüssig miteinander verbunden werden können. Die beiden Modulträger müssen also nicht die gleiche Anzahl Kuppen aufweisen. Der Modulträger 10 und der halbe Modulträger 11 gemäss Figur 3 sind ein Beispiel dafür.

Die vorhergehende Beschreibung der Ausführungsbeispiele gemäss der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen. So sind beispielsweise die in den Figuren 4 und 7 gezeigten Montageprofile 20 bzw. 25 austauchbar und sowohl für den Modulträger 1 als auch für den Modulträger 10 verwendbar. Die in den Figuren gezeigten Komponenten sind auch auf eine andere als in den Figuren gezeigte Weise miteinander kombinierbar.

### Bezugszeichenliste

- 1: Modulträger
- 2: Grundstruktur
- 3: Noppe
- 4: Kuppe
- 5: Kuppe
- 10: Modulträger
- 11: halber Modulträger
- 12: Grundstruktur
- 12.1: Versteifungsrippe
- 14: Kuppe
- 15: Kuppe
- 20: Montageprofil
- 20.1: Profilrippe
- 20.2: Aufnahme
- 20.3: Bohrung
- 25: Montageprofil
- 28: Montageklammer
- 30: Solarmodul
- 31: Klemmplatte
- **α**: Winkel
- h1: Höhe der Kuppe
- h2: Höhe der Kuppe
- H: Horizontale
- L: Länge des Montageprofils
- s: Abstand zwischen zwei Kuppen
- V: Verbindungslinie
- x: X-Achse
- y: y-Achse
- z: z-Achse

## Patentansprüche

1. Modulträger für Solarmodule,
- bei dem eine flache Grundstruktur (12) vorgesehen ist,
- bei dem auf der Grundstruktur (12) mehrere erste hohle Kuppen (14) mit jeweils gleicher Form in einer ersten Reihe angeordnet sind,
- bei dem auf der Grundstruktur (12) mehrere zweite hohle Kuppen (15) mit jeweils gleicher Form in einer zweiten Reihe angeordnet sind,
- bei dem die ersten Kuppen (14) kleiner als die zweiten Kuppen (15) sind,
- bei dem die erste und die zweite Reihe parallel zueinander verlaufen, und
- bei dem die Kuppen (14; 15) derart ausgebildet und angeordnet sind, dass sie mit den Kuppen (14; 15) eines weiteren funktional gleichen Modulträgers (10) einen zweidimensionalen Formschluss bilden können, wobei auf eine der hohen Kuppen (15) des Modulträgers (10) eine der hohen Kuppen (15) des weiteren Modulträgers (10) stülpbar ist.

2. Modulträger nach Patentanspruch 1,
bei dem die Kuppen (14) der ersten Reihe derart ausgebildet sind, dass sie mit den Kuppen (14) der ersten Reihe des weiteren Modulträgers (10) einen Formschluss bilden können.

3. Modulträger nach Patentanspruch 1 oder 2,
bei dem die Kuppen (15) der zweiten Reihe derart ausgebildet sind, dass sie mit den Kuppen (15) der zweiten Reihe des weiteren Modulträgers (10) einen Formschluss bilden können.

4. Modulträger nach einem der Patentansprüche 1 bis 3, bei dem die Kuppen (14, 15) der ersten Reihe und/oder der zweiten Reihe zueinander äquidistant angeordnet sind.

5. Modulträger nach einem der Patentansprüche 1 bis 4, der aus Kunststoff oder Aluminium hergestellt ist.

6. Modulträger nach einem der Patentansprüche 1 bis 5, bei dem die Kuppen (14) der ersten Reihe um so viel niedriger als die Kuppen (15) der zweiten Reihe sind, dass eine gedachte Verbindungslinie (V) zwischen den Kuppen (14, 15) der ersten und zweiten Reihe mit der Horizontalen (H) einen Winkel (**α**) von 5° einschliesst.

7. Modulträger nach einem der Patentansprüche 1 bis 6, bei dem die Kuppen (14, 15) oben flach sind, so dass auf ihnen ein Montageprofil (20) befestigbar ist.

8. Modulträger nach einem der Patentansprüche 1 bis 7,
- bei dem auf den Kuppen (14) der ersten Reihe ein erstes Montageprofil (20) befestigt ist,
- bei dem auf den Kuppen (15) der zweiten Reihe ein zweites Montageprofil (20) befestigt ist, und
- bei dem die Montageprofile (20) unterschiedlich hoch sind.

9. Modulträger nach einem der Patentansprüche 1 bis 8, bei dem in der Grundstruktur (12) Versteifungsrippen (12.1) vorgesehen sind, deren Längsachse quer zur ersten Reihe der Kuppen (14) verläuft.

10. Anordnung mit mehreren Modulträgern nach einem der Patentansprüche 1 bis 9,
- bei der die Kuppen (14) der ersten Reihe eines ersten Modulträgers mit den Kuppen (14) der ersten Reihe eines zweiten Modulträgers einen Formschluss bilden,
- bei der auf den Kuppen (14) der ersten Reihe ein Montageprofil (20) angeordnet ist.

11. Anordnung nach Patentanspruch 10,
bei der auf den Kuppen (15) der zweiten Reihe ein weiteres Montageprofil (20) angeordnet ist.

12. Anordnung nach Patentanspruch 10 oder 11,
bei der Klammern (28) vorgesehen sind, mit denen Solarmodule (30) auf den Montageprofilen (20) befestigbar sind.

13. Modulträger für Solarmodule,
- bei dem eine Grundstruktur (2) vorgesehen ist, auf der eine niedrige Kuppe (4) angeordnet ist,
- bei dem auf der Grundstruktur (2) eine hohe Kuppe (5) vorgesehen ist,
- bei dem die Kuppen (4, 5) derart ausgebildet sind, dass die hohe Kuppe (5) mit der hohen Kuppe (5) eines weiteren funktional gleichen Modulträgers (1) einen Formschluss bilden kann, wobei auf die hohe Kuppe (5) des Modulträgers die hohe Kuppe (15) des weiteren Modulträgers (10) stülpbar ist, und
- bei dem die Kuppen (4, 5) derart ausgebildet sind, dass auf ihnen ein Montageprofil (20) befestigbar ist, auf dem ein Solarmodul (30) montierbar ist.

14. Verwendung der Modulträger nach einem der vorigen Patentansprüche 1 bis 13,
zur Montage von Photovoltaikmodulen (30).

## Claims

1. A module holder for solar modules,
- wherein a flat base structure (12) is provided,
- wherein on the base structure (12), multiple first hollow crests (14) each having the same shape are arranged in a first row,
- wherein on the base structure (12), multiple second hollow crests (15) each having the same shape are arranged in a second row,
- wherein the first crests (14) are smaller than the second crests (15),
- wherein the first and second rows extend in parallel to each other, and
- wherein the crests (14; 15) are configured and arranged such that they can form a two-dimensional positive fit with the crests (14; 15) of another functionally identical module holder (10), wherein onto one of the high crests (15) of the module holder (10) one of the high crests (15) of the other module holder (10) can be fitted.

2. The module holder according to claim 1,
wherein the crests (14) of the first row are configured such that they can form a positive fit with the crests (14) of the first row of the other module holder (10).

3. The module holder according to claim 1 or 2,
wherein the crests (15) of the second row are configured such that they can form a positive fit with the crests (15) of the second row of the other module holder (10).

4. The module holder according to one of claims 1 to 3,
wherein the crests (14, 15) of the first row and/or the second row are arranged at equal distances to each other.

5. The module holder according to one of claims 1 to 4 that is made of plastic or aluminum.

6. The module holder according to one of claims 1 to 5, wherein the crests (14) of the first row are lower than the crests (15) of the second row by such an amount that an imaginary connection line (V) between the crests (14, 15) of the first and second rows includes an angle (α) of 5° with the horizontal (H).

7. The module holder according to one of claims 1 to 6, wherein the crests (14, 15) are flat on top so that a mounting profile (20) can be fitted thereonto.

8. The module holder according to one of claims 1 to 7,
- wherein on the crests (14) of the first row, a first mounting profile (20) is fitted,
- wherein on the crests (15) of the second row, a second mounting profile (20) is fitted, and
- wherein the mounting profiles (20) have different heights.

9. The module holder according to one of claims 1 to 8, wherein in the base structure (12) stiffening ribs (12.1) are provided, the longitudinal axis of which extends transversely to the first row of crests (14).

10. An assembly comprising multiple module holders according to one of claims 1 to 9,
- wherein the crests (14) of the first row of a first module holder form a positive fit with the crests (14) of the first row of a second module holder,
- wherein on the crests (14) of the first row, a mounting profile (20) is arranged.

11. The assembly according to claim 10,
wherein on the crests (15) of the second row, another mounting profile (20) is arranged.

12. The assembly according to claim 10 or 11,
wherein brackets (28) are provided, by means of which solar modules (30) can be fitted on the mounting profiles (20).

13. A module holder for solar modules,
- wherein a base structure (2) is provided, on which a low crest (4) is arranged,
- wherein on the base structure (2), a high crest (5) is provided,
- wherein the crests (4, 5) are configured such that the high crest (5) can form a positive fit with the high crest (5) of another functionally identical module holder (1), wherein onto the high crest (15) of the module holder the high crest (15) of the other module holder (10) can be fitted, and
- wherein the crests (4, 5) are configured such that a mounting profile (20) can be fitted thereonto, on which a solar module (30) can be mounted.

14. Use of the module holders according to one of the preceding claims 1 to 13
for mounting photovoltaic modules (30).

## Revendications

1. Support de module pour modules solaires,
- dans lequel une structure de base plate (12) est prévue,
- dans lequel plusieurs premiers dômes creux (14) avec à chaque fois la même forme sont disposés en une première rangée sur la structure de base (12),
- dans lequel plusieurs seconds dômes creux (15) avec à chaque fois la même forme sont disposés en une seconde rangée sur la structure de base (12),
- dans lequel les premiers dômes (14) sont plus petits que les seconds dômes (15),
- dans lequel la première et la seconde rangée s'étendent parallèlement l'une à l'autre, et
- dans lequel les dômes (14 ; 15) sont réalisés et disposés de telle sorte qu'ils peuvent former avec les dômes (14 ; 15) d'un autre support de module à fonction identique (10) une fermeture géométrique bi-dimensionnelle, dans lequel un des dômes élevés (15) de l'autre support de module (10) peut être retourné sur un des dômes élevés (15) de l'autre support de module (10).

2. Support de module selon la revendication 1,
dans lequel les dômes (14) de la première rangée sont réalisés de telle sorte qu'ils peuvent former avec les dômes (14) de la première rangée de l'autre support de module (10) une fermeture géométrique.

3. Support de module selon la revendication 1 ou 2,
dans lequel les dômes (15) de la seconde rangée sont réalisés de telle sorte qu'ils peuvent former avec les dômes (15) de la seconde rangée de l'autre support de module (10) une fermeture géométrique.

4. Support de module selon une des revendications 1 à 3,
dans lequel les dômes (14, 15) de la première rangée et/ou de la seconde rangée sont disposés à équidistance les uns des autres.

5. Support de module selon une des revendications 1 à 4, qui est fabriqué en plastique ou aluminium.

6. Support de module selon une des revendications 1 à 5,
dans lequel les dômes (14) de la première rangée sont plus bas que les dômes (15) de la seconde rangée dans une mesure telle qu'une ligne de connexion imaginaire (V) entre les dômes (14, 15) de la première et seconde rangée inclut avec l'horizontale (H) un angle (α) de 5°.

7. Support de module selon une des revendications 1 à 6,
dans lequel les dômes (14, 15) sont plats en haut de sorte qu'un profil de montage (20) peut être fixé sur eux.

8. Support de module selon une des revendications 1 à 7,
- dans lequel un premier profil de montage (20) est fixé sur les dômes (14) de la première rangée,
- dans lequel un second profil de montage (20) est fixé sur les dômes (15) de la seconde rangée, et
- dans lequel les profils de montage (20) sont de hauteur différente.

9. Support de module selon une des revendications 1 à 8,
dans lequel des nervures de renforcement (12.1) dont l'axe longitudinal s'étend de manière transversale à la première rangée des dômes (14) sont prévues dans la structure de base (12).

10. Agencement avec plusieurs supports de module selon une des revendications 1 à 9,
- dans lequel les dômes (14) de la première rangée d'un premier support de module forment avec les dômes (14) de la première rangée d'un second support de module une fermeture géométrique,
- dans lequel un profil de montage (20) est disposé sur les dômes (14) de la première rangée.

11. Agencement selon la revendication 10,
dans lequel un autre profil de montage (20) est disposé sur les dômes (15) de la seconde rangée.

12. Agencement selon la revendication 10 ou 11,
dans lequel des brides de fixation (28) avec lesquelles des modules solaires (30) peuvent être fixés sur les profils de montage (20) sont prévues.

13. Support de module pour modules solaires,
- dans lequel une structure de base (2) sur laquelle un dôme bas (4) est disposé est prévue,
- dans lequel un dôme élevé (5) est prévu sur la structure de base (2),
- dans lequel les dômes (4, 5) sont réalisés de telle sorte que le dôme élevé (5) peut former avec le dôme élevé (5) d'un autre support de module à fonction identique (1) une fermeture géométrique, dans lequel le dôme élevé (15) de l'autre support de module (10) peut être retourné sur le dôme élevé (5) du support de module, et
- dans lequel les dômes (4, 5) sont réalisés de telle sorte qu'un profil de montage (20) sur lequel un module solaire (30) peut être monté peut être fixé sur eux.

14. Utilisation des supports de module selon une des revendications précédentes 1 à 13,
pour le montage de modules photovoltaïques (30).
